# EUROPÄISCHE PATENTANMELDUNG

(11) **EP 1 394 697 A2**
(43) Veröffentlichungstag der Anmeldung: **03.03.2004**
(21) Anmeldenummer: 03019066.4
(22) Anmeldetag: 22.08.2003
(51) Int. Cl.: G06F 17/30

(54) **Verfahren zur Verarbeitung von Daten**

(30) Priorität: 30.08.2002 DE 10240104
(71) Anmelder: SIEMENS AKTIENGESELLSCHAFT, 80333 München (DE)
(72) Erfinder: Pfahlmann, Lothar, 91083 Baiersdorf (DE); Schaer, Stefan, 90480 Nürnberg (DE)

(57) **Zusammenfassung**

Für eine besonders detaillierte Übersicht und Selektion von Daten (D) anhand einer hierarchischen Struktur sind erfindungsgemäß bei einem Verfahren zur Verarbeitung von Daten diese in einer Datenbank und/oder einer Datei hinterlegt und/oder einem Programm zugeordnet, wobei die Daten (D) anhand einer hierarchischen Struktur (10) in mehreren Hierarchieebenen (10a bis 10z) nach vorgegebenen Kriterien verdichtet, zusammengefasst und alphanumerisch ausgegeben werden, wobei in mindestens einer die hierarchische Struktur (10) repräsentierenden Hierarchieebene (10a bis 10z) die Daten (D) anhand einer zugrunde liegenden Kategorie (K) zusätzlich bestimmt und grafisch ausgegeben und/oder selektiert werden.

## Beschreibung

Die Erfindung betrifft ein Verfahren zur Verarbeitung von Daten, die in einer Datenbank und/oder einer Datei hinterlegt und/oder einem Programm zugeordnet sind.

Üblicherweise werden heute in komplexen Datenverarbeitungssystemen, z. B. in Rechnernetzen eines einzelnen Unternehmens oder einer einzelnen technischen Anlage, eine Vielzahl von Daten aus Datenbänken, unstrukturierten Textdateien oder anderen beliebigen Dateien verarbeitet. Zur Verwaltung derartiger umfangreicher und komplexer Datenmengen sind diese durch so genannte hierarchische Strukturen, z. B. in Form von herkömmlichen Strukturbäumen, verwaltet. Anhand derartiger Strukturbäume werden die zumeist heterogenen Daten gelöscht, erzeugt, selektiert, navigiert und/oder verarbeitet. Dabei dienen die Strukturbäume nicht nur der Verwaltung von heterogenen Daten, sondern auch der Verwaltung von miteinander verbundenen ebenfalls heterogenen Datenverarbeitungseinheiten innerhalb eines vernetzten Datenverarbeitungssystems.

Ein ganz allgemeines Beispiel hierfür sind die auf dem Betriebssystem Windows basierenden Dateimanager, in denen Dateien und Programme mit deren Namen in einem Speicher aufgelistet werden. Die in den Strukturbäumen als Objekte angezeigten Daten dienen dabei lediglich einer so genannten groben Navigation, indem eine Anzahl von Dateien oder Daten zu einer Gruppe oder Ordner und die wiederum zu einer Hauptgruppe oder Hauptordner zusammengefasst und über zugehörige Objekte mit alphanumerischer Bezeichnung dargestellt und ausgegeben werden. Mit anderen Worten: Die in derartigen Strukturbäumen angezeigten Objekte beschränken sich dabei jeweils auf eine die betreffende Gruppe oder Hauptgruppe von Daten oder Dateien repräsentierende Bezeichnung in Form von Textdarstellungen oder einem einzelnen Symbol zur grafischen Repräsentation. Eine inhaltliche oder Zusammenhänge der Daten bzw. Dateien betreffende Ausgabe von Informationen ist durch eine derartige abstrahierende Form der Strukturbäume nicht ermöglicht.

Der Erfindung liegt daher die Aufgabe zugrunde, ein Verfahren zur Verarbeitung von Daten anzugeben, welches eine gegenüber dem Stand der Technik verbesserte, insbesondere detaillierte Übersicht und Selektion der Daten anhand einer hierarchischen Struktur ermöglicht.

Die genannte Aufgabe wird erfindungsgemäß dadurch gelöst, dass bei einem Verfahren zur Verarbeitung von Daten, welche anhand einer hierarchischen Struktur in mehreren Hierarchieebenen nach vorgegebenen Kriterien verdichtet, zusammengefasst und alphanumerisch ausgegeben werden, in mindestens einer die hierarchische Struktur repräsentierenden Hierarchieebene die Daten anhand einer zugrunde liegenden Kategorie zusätzlich bestimmt und grafisch ausgegeben und/oder selektiert werden.

Die Erfindung geht dabei von der Überlegung aus, dass in einer hierarchischen Struktur neben einer für eine Grobselektion und Grobnavigation geeigneten Form einer lediglich textuellen Beschreibung oder Bezeichnung von Objekten die Daten detaillierter, insbesondere visuell dargestellt und strukturiert werden sollten. Insbesondere sollten die lediglich in Indexform hierarchisch strukturierten Daten, welche daraus resultierend nur allgemein, insbesondere passiv anwählbar sind, aktiv, d. h. bezüglich ihres Inhalts oder ihrer Funktion darstellbar und/oder selektierbar sein. Hierzu werden die Daten in mindestens einer der Hierarchieebenen sowohl alphanumerisch als auch visuell in Form von grafischen Elementen anhand einer zugrunde liegenden Kategorie ausgegeben und/oder selektiert.

Für eine derartig aktive hierarchische Struktur, in welcher die Daten detaillierter im Hinblick auf die zugrunde liegende Logik oder die zugrunde liegende Funktion beschreibbar sind, werden die Daten zweckmäßigerweise anhand der Kategorie funktionsbezogen bestimmt und grafisch ausgegeben. Mit anderen Worten: Die aktive hierarchische Struktur umfasst Datenelemente, welche eine den Daten zugrunde liegende Funktion in Form von Inhalt, Bedeutung bzw. Wirkzusammenhang zu anderen Daten mittels grafischer Elemente, z. B. Signalverknüpfungselemente in Form von UND/ODER-Gattern, in dem bis dahin alphanumerisch aufgebauten Strukturbaum ausgeben.

Alternativ oder zusätzlich werden die Daten anhand der Kategorie signalbezogen bestimmt und grafisch ausgegeben. D. h., je nach gewünschtem Detaillierungsgrad der Darstellung der der hierarchischen Struktur zugrunde liegenden Daten werden einzelne Daten oder Signale, z. B. ein eine Motorsteuerung bewirkendes Motor-Ein-Steuersignal, bestimmt und grafisch in der betreffenden Hierarchieebene der hierarchischen Struktur ausgegeben, insbesondere dargestellt.

Alternativ oder zusätzlich wird des Weiteren anhand der Kategorie eine den Daten zugrunde liegende Ablauffolge bestimmt und grafisch ausgegeben. Somit werden neben dem funktionalen Zusammenhang der Daten auch der Status eines einzelnen Betriebssignales sowie deren Position in einer Ablauffolge eines Programms in der hierarchischen Struktur grafisch dargestellt und ausgegeben. Insbesondere kann bei einer derartig aktiven hierarchischen Struktur ein einzelnes Signal oder eine einzelne Funktion angesteuert, d. h. selektiert werden, wobei die betreffende Funktion z. B. ein- oder ausgeschaltet wird. Mit anderen Worten: Eine derartige hierarchische Struktur weist neben der einfachen organisatorischen Verwaltung der zugrunde liegenden Daten auch eine prozessrelevante Funktion in Form von Überwachung, Steuerung, Regelung und/oder Verarbeitung von in einzelnen Hierarchieebenen grafisch ausgegebenen Daten auf.

In einer bevorzugten Ausführungsform wird die hierarchische Struktur als Baumstruktur erzeugt und ausgegeben. Die Baumstruktur ermöglicht eine besonders leichte und übersichtliche Darstellung der den Daten zugrunde liegenden Organisation sowie der den Daten zugrunde liegenden Funktion bzw. deren Ablauffolge in einem komplexen Programm. Zum Öffnen oder Schließen von zugehörigen weiteren Hierarchieebenen und/oder Daten wird der jeweiligen Hierarchieebene zweckmäßigerweise ein Knotenelement zugeordnet. Dies ermöglicht in besonders einfacher Weise ein so genanntes Auf- und/oder Zuklappen einzelner Hierarchieebenen und/oder Daten, z. B. Dateien oder grafisch ausgegebenen Datenelementen, so dass bei einem zugrunde liegenden komplexen technischen Prozess einzelne Prozessabschnitte und/oder Teilprozesse vergrößert dargestellt werden können oder im eingeklappten oder geschlossenen Zustand der gesamte Prozess dargestellt werden kann.

Die mit der Erfindung erzielten Vorteile bestehen insbesondere darin, dass durch eine derartige Kombination einer herkömmlichen konventionellen, alphanumerisch ausgeführten hierarchischen Struktur mit grafischen Elementen die einem technischen Prozess, einem Projekt und/oder einer technischen Anlage zugrunde liegenden Daten anschaulich und leicht verständlich in Form von Ablaufbildern ausgegeben werden. Hierdurch ist eine besonders bedienerfreundliche Darstellung ermöglicht, welche einen schnellen Überblick über den den Daten zugrunde liegenden Prozess sicherstellt.

Ausführungsbeispiele der Erfindung werden anhand einer Zeichnung näher erläutert. Darin zeigen:
- FIG 1: schematisch eine Darstellung eines Fensters für einen herkömmlichen Dateimanager mit alphanumerisch bezeichneten Daten und
- FIG 2: schematisch eine Darstellung eines Fensters für einen Dateimanager mit sowohl grafisch dargestellten als auch alphanumerisch bezeichneten Daten.

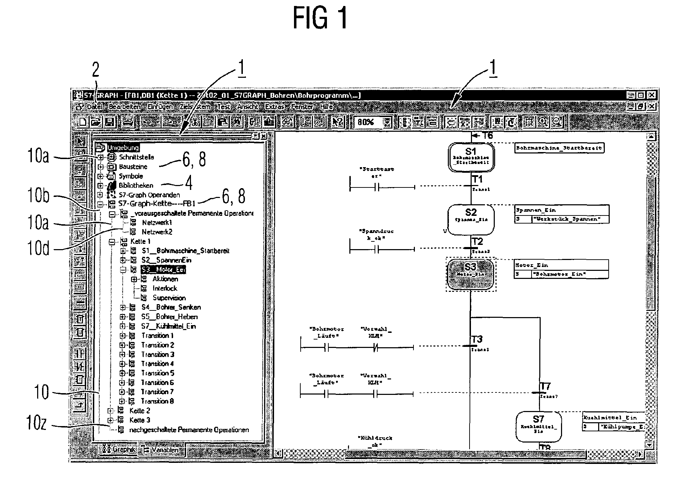

Darin zeigt die Figur 1 ein geöffnetes Fenster 1 eines herkömmlichen Dateimanagers 2 einer Datenverarbeitungseinheit. Dabei sind Daten D beispielsweise in einer Datenbank 4 und/oder einer Datei 6 hinterlegt und/oder einem Programm 8 zugeordnet. Zur Verarbeitung der Daten D werden diese anhand einer hierarchischen Struktur 10 in mehreren Hierarchieebenen 10a bis 10z nach vorgegebenen Kriterien, z. B. Funktionen und/oder Zuordnung in Form von Ordnern oder Gruppen, z. B. Haupt-, Unterordner und/oder Haupt-/Untergruppe, verdichtet, zusammengefasst und alphanumerisch ausgegeben. Beispielsweise umfasst die Hauptgruppe "S7-Graph-Kette" mehrere Untergruppen, die wiederum weitere Untergruppen umfassen können, die alle alphanumerisch bezeichnet sind, z. B. die Untergruppe "vorausgeschaltete permanente Operationen" umfasst wiederum zwei Untergruppen mit der Bezeichnung "Netzwerk 1" und "Netzwerk 2". Je nach Detaillierungsgrad der in dieser hierarchischen Struktur 10 vorgegebenen Hierarchieebenen 10a bis 10z umfassen die einzelnen Ordner oder Gruppen Datenbanken 4, Programme 8 oder Dateien 6. Die hierarchische Struktur 10 ist beispielhaft als Baumstruktur generiert und ausgegeben. Eine derartige lediglich eine alphanumerische Bezeichnung umfassende Kennzeichnung der Hierarchieebenen 10a bis 10z und deren zugeordneten Datenbanken 4, Dateien 6 bzw. Programme 8 ist für einen Bediener des Dateimanagers 2 bei einer komplexen Anlage unübersichtlich und nur schwer bedienbar.

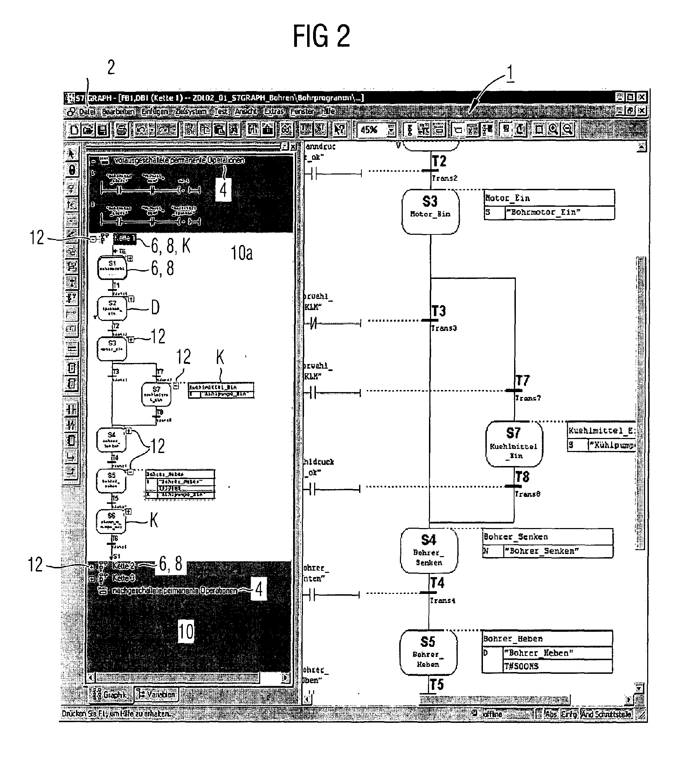

Zweckmäßigerweise werden daher, wie in Figur 2 gezeigt, die Daten D mindestens einer die hierarchische Struktur 10 repräsentierenden Hierarchieebene 10a anhand einer zugrunde liegenden Kategorie K zusätzlich bestimmt und grafisch ausgegeben. Die hierarchische Struktur 10 ist beispielhaft als Baumstruktur ausgeführt.

Je nach Art und Vorgabe werden dabei die Daten D anhand der Kategorie K beispielsweise funktionsbezogen bestimmt und grafisch ausgegeben. Im vorliegenden Beispiel werden durch Anklicken der Funktion "Kette 1" die der Funktion zugrunde liegenden Daten D bestimmt und in Form einer Grafik und somit einer für den Bediener besonders schnell und leicht lesbaren Form ausgegeben. Je nach gewünschtem Detaillierungsgrad der grafischen Darstellung der Daten D können diese auch signalbezogen bestimmt und grafisch ausgegeben werden. Beispielsweise werden in der Funktion "Kette 1" als Daten D die Signale "Kühlmittel ein" bzw. "Bohrer senken" bestimmt und grafisch ausgegeben. Wie darüber hinaus in der Funktion "Kette 1" gezeigt, wird eine den Daten D zugrunde liegende Ablauffolge anhand der Kategorie K bestimmt und grafisch ausgegeben. Je nach Einstellung und Vorgabe des Dateimanagers 2 können die Daten D anhand der Kategorie K funktionsbezogen, signalbezogen und/oder entsprechend ihrer Ablauffolge grafisch ausgegeben werden. Dabei kann für eine aktiv ausgebildete Baumstruktur durch Anklicken der Daten D, z. B. des Signals "Bohrer senken", eine Bedienfunktion im zugehörigen Prozess oder in der zugehörigen technischen Anlage ausgelöst werden, wodurch der Bohrer entsprechend gesteuert, d. h. gesenkt wird.

Für eine hinreichende Übersicht der Darstellung der hierarchischen Struktur der Daten D wird der jeweiligen Hierarchieebene 10a bis 10z zum Öffnen oder Schließen von zugehörigen weiteren Hierarchieebenen 10a bis 10z und/oder Daten D ein Knotenelement 12 zugeordnet. Anhand des jeweiligen Knotenelements 12 können einzelne Signale und/oder Programme und/oder Dateien detaillierter bestimmt und anschließend in Form von Symbolen oder anderen Grafikelementen grafisch ausgegeben werden.

Eine derartige hierarchische Struktur 10, welche sowohl alphanumerische Bezeichnungen als auch grafische Elemente zur Darstellung der Daten D umfasst, ermöglicht ein schnelles und sicheres Auffinden von relevanten Daten D in einer für den Bediener besonders gut visualisierten Darstellung. Dabei ist die hierarchische Struktur 10 derart ausgestaltet, dass die einzelnen grafisch ausgegebenen Elemente der Daten D selektiert, überwacht und/oder bedient werden können. Insbesondere durch die bis in das Signal aufgelöste Darstellung der hierarchischen Struktur 10 ist ein den Daten D zugrunde liegender Prozess besonders gut steuerbar und/oder regelbar.

## Patentansprüche

1. Verfahren zur Verarbeitung von Daten (D), die in einer Datenbank (4) und/oder einer Datei (6) hinterlegt und/oder einem Programm (8) zugeordnet sind, wobei die Daten (D) anhand einer hierarchischen Struktur (10) in mehreren Hierarchieebenen (10a bis 10z) nach vorgegebenen Kriterien verdichtet, zusammengefasst und alphanumerisch ausgegeben werden, wobei in mindestens einer die hierarchische Struktur (10) repräsentierenden Hierarchieebene (10a bis 10z) die Daten (D) anhand einer zugrunde liegenden Kategorie (K) zusätzlich bestimmt und grafisch ausgegeben und/oder selektiert werden.

2. Verfahren nach Anspruch 1, bei dem anhand der Kategorie (K) die Daten (D) funktionsbezogen bestimmt und grafisch ausgegeben werden.

3. Verfahren nach Anspruch 1 oder 2, bei dem anhand der Kategorie (K) die Daten (D) signalbezogen bestimmt und grafisch ausgegeben werden.

4. Verfahren nach einem der Ansprüche 1 bis 3, bei dem anhand der Kategorie (K) eine den Daten (D) zugrunde liegende Ablauffolge bestimmt und grafisch ausgegeben wird.

5. Verfahren nach einem der Ansprüche 1 bis 4, bei dem die hierarchische Struktur (10) als Baumstruktur erzeugt und ausgegeben wird.

6. Verfahren nach einem der Ansprüche 1 bis 5, bei dem der jeweiligen Hierarchieebene (10a bis 10z zum Öffnen oder Schließen von zugehörigen weiteren Hierarchieebenen (10a bis 10z) und/oder Daten (D) ein Knotenelement (12) zugeordnet wird.
